# FASCICULE DE BREVET EUROPEEN

(11) **EP 2 734 392 B1**
(45) Date de publication et mention de la délivrance du brevet: **10.02.2016**
(21) Numéro de dépôt: 12740564.5
(22) Date de dépôt: 20.07.2012
(51) Int. Cl.: B60K 11/08

(54) **DISPOSITIF D'OBTURATION D'ORIFICE DE FACE AVANT DE VEHICULE AUTOMOBILE**
SCHLIESSVORRICHTUNG EINER ÖFFNUNG EINER KRAFTFAHRZEUGVORDERVERKLEIDUNG
DEVICE FOR CLOSING AN OPENING A MOTOR VEHICLE FRONT END

(30) Priorité: 21.07.2011 FR 1156644
(43) Date de publication de la demande: 28.05.2014
(73) Titulaire: Valeo Systemes Thermiques, 78320 Le Mesnil Saint Denis (FR)
(72) Inventeur: VACCA, Frédéric, F-78910 Behoust (FR)
(74) Mandataire: Metz, Gaëlle
(86) Numéro de dépôt international: PCT/EP2012/064360
(87) Numéro de publication internationale: WO 2013/011145

(56) Documents cités:
- EP-A1- 0 605 325
- DE-A1-102008 013 420
- DE-U1-202008 002 433
- JP-U- 58 139 519

## Description

La présente invention concerne les dispositifs d'obturation d'orifice et plus précisément un dispositif d'obturation d'orifice de face avant de véhicule automobile.

Le document DE 20 2008 002 433 U1 décrit un dispositif selon le preambule de la revendication 1.

Les faces avant de véhicules automobiles sont généralement composées de deux entrées d'air principales dites voie haute et voie basse séparées par une poutre pare-choc. Derrière cette poutre pare-choc sont généralement placés les échangeurs de chaleurs du véhicule automobile, comme par exemple celui utilisé pour la climatisation de l'habitacle ou encore celui utilisé pour le refroidissement du moteur.

Il est également connu de disposer, dans le trajet d'air passant par les entrées d'air principales, plus généralement la voie basse, un cadre support comportant une multiplicité de volets montés pivotants autours d'axes parallèles et propres à prendre une multiplicité de positions angulaires différentes, comprises entre une position d'ouverture et une position de fermeture, sous l'action de moyens de commande appropriés.

On obtient ainsi un dispositif s'apparentant à une jalousie qui permet d'ajuster le débit d'air traversant les entrées d'airs et arrivant aux échangeurs de chaleurs et ainsi d'optimiser l'efficacité de ces échangeurs de chaleurs en fonction des besoins. De plus, à grande vitesse, les volets en position de fermeture permettent de diminuer le coefficient de trainée du véhicule et ainsi d'améliorer son aérodynamisme.

Généralement, le dispositif permettant le passage d'une position de fermeture à une position d'ouverture des volets comporte un actionneur qui peut être mécanique, électrique ou encore pneumatique, faisant pivoter les volets en synchronisme au moyen d'une bielle de pivotement.

En position de fermeture et en condition de roulage, les volets subissent la pression de l'air due à la vitesse du véhicule et qui s'applique sur toute leur surface. Ainsi, ils sont conçus pour résister à une pression issue de la vitesse du véhicule additionnée à une vitesse de vent extrême dans le cas ou le véhicule avancerait contre le vent, augmentant de fait la pression de l'air appliquée aux volets.

Pour cela, les volets ont des surfaces, des épaisseurs, des géométries adaptées et sont réalisés dans des matériaux capables de résister à de telles contraintes.

Cependant, ces contraintes sont généralement calculées en fonction d'un fluide qui est l'air ayant une masse volumique de 1,2 Kg/m³, mais plus la masse volumique du fluide augmente plus les contraintes sont importantes. Ainsi dans le cas de véhicules tout-terrain qui passent à gué ou alors passant dans une flaque d'eau importante, le fluide faisant pression contre les volets est de l'eau ayant une densité de 1000kg/m³. On arrive vite alors à dépasser les contraintes admissibles par les volets qui peuvent s'endommager voir même rompre. Il est ainsi connu pour éviter d'endommager les volets de diminuer fortement la vitesse de traversée dans l'eau. Par exemple pour un véhicule tout-terrain traversant un gué ayant une hauteur d'eau de 200 à 350mm, les constructeurs imposent une vitesse d'approche de 50km/h avec une vitesse constante de passage de 15 à 20 km/h. Cependant cela n'est pas toujours évident pour le conducteur d'apprécier ces vitesses de traversée.

Un des buts de l'invention est donc de remédier au moins partiellement aux inconvénients de l'art antérieur et de proposer un dispositif de volets permettant de s'affranchir au moins en partie de la limitation de vitesse du véhicule notamment pour la traversée d'eau.

L'invention concerne donc un dispositif d'obturation d'orifice en particulier pour entrée d'air principale de face avant de véhicule automobile, comprenant :
- un cadre support comportant au moins un volet pivotant autour d'un axe de pivotement entre une position d'ouverture et une position de fermeture,
- au moins une bielle de pivotement, ledit au moins un volet ayant un axe de liaison avec ladite bielle de pivotement,
- au moins un actionneur de mouvement de la bielle de pivotement, commandant le positionnement du au moins un volet,
le au moins un volet étant relié à un moyen de d'ouverture élastique comportant au moins une partie mobile, un élément élastique et un élément de retenue dudit élément élastique, permettant au moins partiellement l'ouverture dudit volet en cas de contrainte supérieure à la résistance à la compression dudit élément élastique.

Selon un aspect de l'invention, le moyen d'ouverture élastique est placé dans un logement de la bielle de pivotement et que la partie mobile dudit moyen d'ouverture élastique est relié au volet au niveau de l'axe de liaison.

Selon un autre aspect de l'invention, le au moins un volet relié à un moyen d'ouverture élastique est un volet asymétrique.

Selon un autre aspect de l'invention, l'élément élastique est un ressort.

Selon un autre aspect de l'invention, ledit dispositif d'obturation comporte au moins un ensemble de volets comprenant une pluralité de rangs parallèles de volets.

Selon un autre aspect de l'invention, le au moins un volet relié à au moins un moyen d'ouverture élastique, appartient au rang inférieur.

Selon un autre aspect de l'invention, que ledit dispositif d'obturation comporte deux ensembles de volets positionnés de chaque cotés d'un élément de commande regroupant l'actionneur et la bielle de pivotement.

L'invention concerne également une face avant de véhicule automobile comprenant un dispositif d'obturation comportant :
- un cadre support comportant au moins un volet pivotant autour d'un axe de pivotement entre une position d'ouverture et une position de fermeture,
- au moins une bielle de pivotement, ledit au moins un volet ayant un axe de liaison avec ladite bielle de pivotement,
- au moins un actionneur de mouvement de la bielle de pivotement, commandant le positionnement du au moins un volet,
le au moins un volet étant relié à un moyen de d'ouverture élastique comportant au moins une partie mobile, un élément élastique et un élément de retenue dudit élément élastique, permettant au moins partiellement l'ouverture dudit volet en cas de contrainte supérieure à la résistance à la compression dudit élément élastique.

Selon un autre aspect de l'invention, ledit dispositif d'obturation est placé sur la voie basse d'entrée d'air de la face avant de véhicule automobile.

D'autres caractéristiques et avantages de l'invention apparaîtront plus clairement à la lecture de la description suivante, donnée à titre d'exemple illustratif et non limitatif, et des dessins annexés parmi lesquels :
- les figures 1a et 1b montrant une représentation en perspective d'une portion de face avant de véhicule automobile comportant un dispositif d'obturation en position d'ouverture et en position de fermeture,
- la figure 2 montrant une représentation schématique du mécanisme du dispositif d'obturation,
- les figures 3a et 3b montrant une représentation schématique en vue de coté d'un dispositif d'obturation en position de fermeture avec et sans l'action d'un moyen d'ouverture élastique.

Les éléments identiques sur les différentes figures, portent les mêmes références.

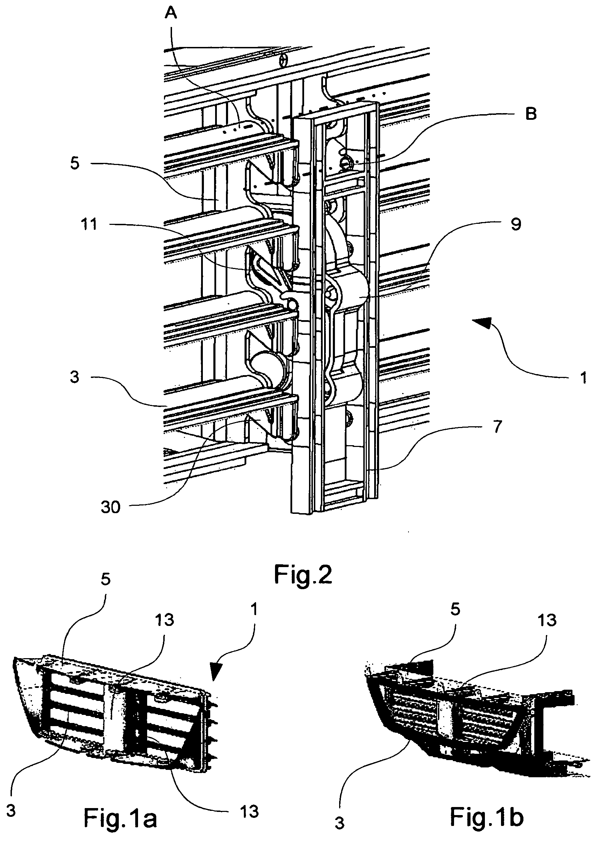

Les figures 1a et 1b montrent une représentation en perspective de face avant de véhicule automobile comportant un dispositif d'obturation 1 en position d'ouverture.

Ledit dispositif d'obturation 1 comporte un cadre support 5 sur lequel sont installés deux ensembles de volets 3 formant des rangs de volets 3 parallèles, en position d'ouverture. Les deux ensembles de volets 3 sont séparés l'un de l'autre par un élément de commande 13 regroupant, comme le montre la figure 2, une bielle 7 de pivotement reliée aux volets 3 par une nervure 30 perpendiculaire au volet 3, généralement venant de matière avec ledit volet 3 et portant un axe de liaison B.

Ledit élément de commande 13 comporte également un actionneur 9. L'actionneur 9 peut être électrique, comme par exemple un moteur électrique, pneumatique, comme par exemple un vérin, ou encore mécanique. Ledit actionneur applique à la bielle 7 de pivotement un mouvement vers le haut ou vers le bas, ici au moyen d'un levier 11.

Les volets 3 peuvent pivoter autour d'un axe de pivotement A défini par leur liaison avec le cadre support 5. L'axe de liaison B entre les volets 3 et la bielle 7, étant excentré par rapport à l'axe de pivotement A, un déplacement vers le haut ou vers le bas de la bielle 7 sous l'action de l'actionneur 9 entraine le pivotement des volets autour de l'axe de pivotement A et donc le passage desdits volets en position de fermeture, comme montré à la figure 1b, ou en position d'ouverture, comme montré à la figure 1a.

Tous les volets 3 étant reliés à la même bielle 7 de pivotement, le passage d'une position d'ouverture à une position de fermeture est synchrone pour tous lesdits volets 3. Il est également possible que les ensembles ne comportent qu'un seul volet 3.

Sans sortir du cadre de l'invention, il est également possible d'avoir un dispositif d'obturation 1 d'orifice de face avant de véhicule automobile ne comportant d'un seul ensemble de volets 3 s'étendant sur toute la largeur du cadre support 5 et comportant un élément de commande 13 sur un des cotés dudit cadre support 5 ou deux éléments de commandes 13 synchrones situés de chaque cotés du cadre support 5.

Il est également possible d'avoir un dispositif d'obturation 1 comportant plusieurs ensembles de volets 3, chacun commandés individuellement par un ou plusieurs éléments de commandes 13.

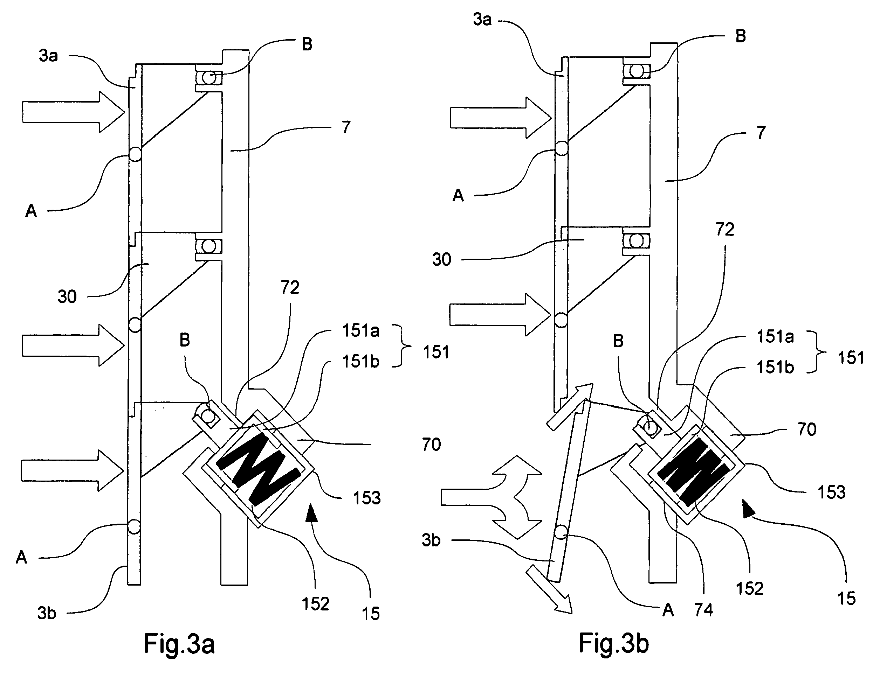

Les figures 3a et 3b montrent plus en détail la liaison entre les volets 3a et 3b et la bielle 7 de pivotement ainsi que la liaison entre au moins un volet 3b avec un moyen d'ouverture élastique 15.

La bielle 7 de pivotement comporte au moins un logement 70 dans lequel est inséré un moyen d'ouverture élastique 15. Ledit moyen d'ouverture élastique 15 comporte un élément mobile 151 en translation, comportant une première portion 151a d'un diamètre inférieure à une seconde portion 151b. Le moyen d'ouverture élastique comporte également un élément élastique 152 de résistance à la compression et un élément de retenue 153 dudit élément élastique 152.

Le logement 70 de la bielle 7 comporte un orifice 72 par lequel la première portion 151a de l'élément mobile 151 dépasse de sorte à pouvoir être reliée à l'axe de liaison B du volet 3b, le diamètre dudit orifice 72 étant inférieur à celui de la seconde portion 152b de l'élément mobile 151 de sorte que ladite seconde portion 151b soit bloquée dans le logement 70.

Le logement 70 de la bielle 7 comporte également un orifice 74, à l'opposée de l'orifice 72, dans lequel est inséré de façon statique en translation l'élément de retenue 153. Par exemple, l'élément de retenue 153 peut être clipsé ou alors vissé dans l'orifice 74, refermant ainsi le logement 70.

A l'intérieur du logement 70, l'élément élastique 152 du moyen d'ouverture élastique 15 est situé entre l'élément mobile 151 et l'élément de retenue 153. Ledit l'élément élastique 152, résistant à la compression et qui, prend appui sur l'élément de retenue 153 et exerce sur l'élément mobile 151 une force le repoussant de l'élément de retenue 153.

Comme le montre la figure 3a, en position de fermeture, le moyen d'ouverture élastique 15, grâce à la résistance à la compression de l'élément élastique 152, permet de conserver le volet 3b en position de fermeture et ce malgré une contrainte de pression subit par les volets 3a, 3b exercée par un fluide, par exemple de l'air en condition de roulage.

Cependant, si la pression exercée par le fluide sur le volet 3a est supérieure à la résistance à la compression de l'élément élastique 152, ce dernier se comprime et la partie mobile 151 s'enfonce dans le logement 70 permettant au volet 3b de pivoter autour de son axe de pivotement A et de s'entrouvrir. Le fluide peut alors passer par les ouvertures partielles crées par le pivotement du volet 3b et ainsi la pression exercée sur les volets peut diminuer, protégeant ces derniers d'une rupture éventuelle.

L'élément élastique 152 peut être par exemple un ressort et a une résistance à la compression suffisante pour résister à des contraintes « normales » subie par le dispositif d'obturation 1. On entend par la que l'élément élastique 152 ne se comprime que pour des contraintes supérieure aux contraintes issues de la vitesse maximale du véhicule additionnée à une vitesse de vent extrême dans le cas ou le véhicule avancerait contre le vent.

L'ouverture du volet 3b relié au moyen d'ouverture élastique 15 est rendu possible par le fait que ledit volet 3b est asymétrique, c'est-à-dire que son axe de pivotement A n'est pas centré et donc que les parties de part et d'autre de son axe de pivotement A n'ont pas une surface égale. Ainsi la partie du volet 2b portant la nervure 30 et donc reliée au moyen d'ouverture élastique 15, a une surface supérieure à la partie du volet 3b située de l'autre coté de l'axe de pivotement A. La partie du volet 3b subit de fait une pression plus importante, en position de fermeture, que l'autre partie et donc permet d'initier le mouvement d'ouverture. Dans le cas de volets 3a symétriques, c'est-à-dire où les parties du volet 3a sont de même surface, la pression surfacique pour chaque partie est identique et donc s'équilibre empêchant le pivotement du volet 3a sous l'effet de contraintes de pression.

Préférentiellement, le ou les volets 3b reliés à un moyen d'ouverture élastique 15 sont des volets 3b appartenant aux rangs inférieurs d'un ensemble de volet 3 situé sur la voie basse d'alimentation d'air d'une face avant de véhicule automobile, c'est-à-dire les plus proches du sol. En effet, ce sont ces rangs inférieurs qui ont la plus forte probabilité d'être immergés et de subir de fortes contraintes lors d'un passage de gué pour un véhicule tout-terrain ou lors de la traversée d'une flaque d'eau importante.

Ainsi, on voit bien que le dispositif d'obturation 1 selon l'invention permet en cas de contraintes importantes appliquées sur les volets 3, de réduire ces contraintes grâce à un ou plusieurs moyens d'ouverture élastique 15 et ainsi de préserver l'intégrité des volets 3. De plus cela permet également de s'affranchir au moins partiellement des limitations de vitesses préconisées pour la traversée d'eau comme lors d'un passage à gué.

## Revendications

1. Dispositif d'obturation (1) d'orifice en particulier pour entrée d'air principale de face avant de véhicule automobile, comprenant :
- un cadre support (5) comportant au moins un volet (3) pivotant autour d'un axe de pivotement (A) entre une position d'ouverture et une position de fermeture,
- au moins une bielle (7) de pivotement, ledit au moins un volet (3) ayant un axe de liaison (B) avec ladite bielle (7) de pivotement,
- au moins un actionneur (9) de mouvement de la bielle (7) de pivotement, commandant le positionnement du au moins un volet (3),
le au moins un volet (3) étant relié à un moyen d'ouverture élastique (15) comportant au moins une partie mobile (151), un élément élastique (152) et un élément de retenue (153) dudit élément élastique (152), **caractérisé en ce que** ledit moyen d'ouverture élastique permet au moins partiellement l'ouverture dudit volet (3) en cas de contrainte supérieure à la résistance à la compression dudit élément élastique (152).

2. Dispositif d'obturation (1) selon la revendication précédente, **caractérisé en ce que** le moyen d'ouverture élastique (15) est placé dans un logement (70) de la bielle (7) de pivotement et que la partie mobile (151) dudit moyen d'ouverture élastique (15) est relié au volet (3b) au niveau de l'axe de liaison (B).

3. Dispositif d'obturation (1) selon la revendication précédente, **caractérisé en ce que** le au moins un volet (3b) relié à un moyen d'ouverture élastique (15) est un volet asymétrique.

4. Dispositif d'obturation (1) selon l'une des revendications précédentes, **caractérisé en ce que** l'élément élastique (152) est un ressort.

5. Dispositif d'obturation (1) selon l'une des revendications précédentes, **caractérisé en ce que** ledit dispositif d'obturation (1) comporte au moins un ensemble de volets (3) comprenant une pluralité de rangs parallèles de volets (3).

6. Dispositif d'obturation (1) selon la revendication précédente, **caractérisé en ce que** le au moins un volet (3) relié à au moins un moyen d'ouverture élastique (15), appartient au rang inférieur.

7. Dispositif d'obturation (1) selon l'une des revendications 5 et 6, **caractérisé en ce que** ledit dispositif d'obturation (1) comporte deux ensembles de volets (3) positionnés de chaque cotés d'un élément de commande (13) regroupant l'actionneur (9) et la bielle (7) de pivotement.

8. Face avant de véhicule automobile comprenant un dispositif d'obturation (1) selon l'une des revendications 1 à 7.

9. Face avant de véhicule automobile selon la revendication précédente, **caractérisé en ce que** ledit dispositif d'obturation (1) est placé sur la voie basse d'entrée d'air de la face avant de véhicule automobile.

## Patentansprüche

1. Öffnungsabdichtungsvorrichtung (1) insbesondere für Hauptlufteingang für die Vorderseite eines Kraftfahrzeugs, die Folgendes umfasst:
- einen Tragrahmen (5), der mindestens eine Klappe (3) umfasst, die um eine Schwenkachse (A) zwischen einer Öffnungs- und einer Verschlussposition schwenkt,
- mindestens ein Schwenkpleuel (7), wobei die mindestens eine Klappe (3) eine Verbindungsachse (B) mit dem Schwenkpleuel (7) hat,
- mindestens einen Bewegungsstellantrieb (9) des Schwenkpleuels (7), der die Positionierung der mindestens einen Klappe (3) steuert,
wobei die mindestens eine Klappe (3) mit einem elastischen Öffnungsmittel (15) verbunden ist, das mindestens einen beweglichen Teil (151), ein elastisches Element (152) und ein Rückhalteelement (153) des elastischen Elements (152) umfasst, **dadurch gekennzeichnet**, das mindestens das teilweise Öffnen der Klappe (3) im Belastungsfall erlaubt, die höher ist als die Kompressionsfestigkeit des elastischen Elements (152).

2. Abdichtungsvorrichtung (1) nach dem vorhergehenden Anspruch, **dadurch gekennzeichnet, dass** das elastische Öffnungsmittel (15) in einer Aufnahme (70) des Schwenkpleuels (7) positioniert ist, und dass der bewegliche Teil (151) des elastischen Öffnungsmittels (15) mit der Klappe (3b) im Bereich der Verbindungsachse (B) verbunden ist.

3. Abdichtungsvorrichtung (1) nach dem vorhergehenden Anspruch, **dadurch gekennzeichnet, dass** die mindestens eine Klappe (3b), die mit einem elastischen Öffnungsmittel (15) verbunden ist, eine asymmetrische Klappe ist.

4. Abdichtungsvorrichtung (1) nach einem der vorhergehenden Ansprüche, **dadurch gekennzeichnet, dass** das elastische Element (152) eine Feder ist.

5. Abdichtungsvorrichtung (1) nach einem der vorhergehenden Ansprüche, **dadurch gekennzeichnet, dass** die Abdichtungsvorrichtung (1) mindestens eine Einheit Klappen (3) umfasst, die mehrere parallele Reihen von Klappen (3) umfasst.

6. Abdichtungsvorrichtung (1) nach dem vorhergehenden Anspruch, **dadurch gekennzeichnet, dass** die mindestens eine Klappe (3), die mit mindestens einem elastischen Öffnungsmittel (15) verbunden ist, zur unteren Reihe gehört.

7. Abdichtungsvorrichtung (1) nach einem der Ansprüche 5 und 6, **dadurch gekennzeichnet, dass** die Abdichtungsvorrichtung (1) zwei Einheiten von Klappen (3) umfasst, die jeweils auf einer Seite eines Steuerelements (13) positioniert sind, das den Stellantrieb (9) und das Schwenkpleuel (7) vereint.

8. Vorderseite eines Kraftfahrzeugs, die eine Abdichtungsvorrichtung (1) nach einem der Ansprüche 1 bis 7 umfasst.

9. Kraftfahrzeugvorderseite nach dem vorhergehenden Anspruch, **dadurch gekennzeichnet, dass** die Abdichtungsvorrichtung (1) auf dem unteren Lufteingangskanal der Vorderseite des Kraftfahrzeugs platziert ist.

## Claims

1. Hole sealing device (1), in particular for a main air inlet of the front face of a motor vehicle, comprising:
- a support frame (5) which comprises at least one flap (3) which pivots about a pivot axis (A) between an open position and a closed position,
- at least one pivot connecting rod (7), the at least one flap (3) having a connection axis (B) with respect to the pivot connecting rod (7),
- at least one actuator (9) which is for moving the pivot connecting rod (7) and which controls the positioning of the at least one flap (3),
the at least one flap (3) being connected to a resilient opening means (15) which comprises at least one movable portion (151), a resilient element (152) and an element (153) for retaining the resilient element (152), **characterized in that** resilient opening means (15) enables the flap (3) to be at least partially opened in the event of a stress greater than the compression resistance of the resilient element (152).

2. Sealing device (1) according to the preceding claim, **characterized in that** the resilient opening means (15) is placed in a housing (70) of the pivot connecting rod (7) and **in that** the movable portion (151) of the resilient opening means (15) is connected to the flap (3b) in the region of the connection axis (B).

3. Sealing device (1) according to the preceding claim, **characterized in that** the at least one flap (3b) which is connected to a resilient opening means (15) is an asymmetrical flap.

4. Sealing device (1) according to one of the preceding claims, **characterized in that** the resilient element (152) is a spring.

5. Sealing device (1) according to one of the preceding claims, **characterized in that** the sealing device (1) comprises at least one group of flaps (3) which comprise(s) a plurality of parallel rows of flaps (3).

6. Sealing device (1) according to the preceding claim, **characterized in that** the at least one flap (3) which is connected to at least one resilient opening means (15) belongs to the lower row.

7. Sealing device (1) according to either of Claims 5 and 6, **characterized in that** the sealing device (1) comprises two groups of flaps (3) which are positioned at each side of a control element (13) which contains the actuator (9) and the pivot connecting rod (7).

8. Front face of a motor vehicle which comprises a sealing device (1) according to one of Claims 1 to 7.

9. Front face of a motor vehicle according to the preceding claim, **characterized in that** the sealing device (1) is placed on the lower air inlet channel of the front face of a motor vehicle.
